(19) Europäisches Patentamt / European Patent Office / Office européen des brevets

(11) **EP 2 924 901 A1**

(12) **EUROPEAN PATENT APPLICATION**
published in accordance with Art. 153(4) EPC

(43) Date of publication:
**30.09.2015 Bulletin 2015/40**

(21) Application number: **12888707.2**

(22) Date of filing: **22.11.2012**

(51) Int Cl.:
**H04J 13/00** (2011.01)     **H04W 28/16** (2009.01)

(86) International application number:
**PCT/CN2012/085061**

(87) International publication number:
**WO 2014/079018 (30.05.2014 Gazette 2014/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
 • **WANG, Zongjie**
   **Shenzhen**
   **Guangdong 518129 (CN)**
 • **MA, Xueli**
   **Shenzhen**
   **Guangdong 518129 (CN)**
 • **WANG, Fan**
   **Shenzhen**
   **Guangdong 518129 (CN)**
 • **LI, Yuanjie**
   **Shenzhen**
   **Guangdong 518129 (CN)**
 • **XU, Wenying**
   **Shenzhen**
   **Guangdong 518129 (CN)**

(74) Representative: **Isarpatent**
**Patentanwälte Behnisch Barth Charles**
**Hassa Peckmann & Partner mbB**
**Friedrichstrasse 31**
**80801 München (DE)**

(54) **METHOD CAPABLE OF CHANGING BANDWIDTH, NETWORK-SIDE DEVICE AND USER EQUIPMENT**

(57) The present invention provides a method, network side device and user equipment of variable bandwidth. The method includes: configuring a first type carrier and a second type carrier, wherein a chip rate of the first type carrier is 3.8Mcps, a chip rate of the second type carrier is P*3.84Mcps, and P is smaller than 1 and larger than 0; using the first type carrier and/or the second type carrier for communication. In this way, since the chip rate of the second type carrier is low and occupied bandwidth is small, the second type carrier may be suitable for non-standard bandwidth, thus utilization efficiency of bandwidth may be improved and waste of the bandwidth may be reduced.

a first type carrier and a second type carrier are configured — 101

the first type carrier and/or the second type carrier are used for communication — 102

Fig. 1

**Description**

**TECHNICAL FIELD**

The present invention relates to communication field, and particularly, to a method, a network side device and an user equipment of variable bandwidth.

**BACKGROUND**

In order to meet growing rate requirements of users, high speed packet access (High Speed Packet Access, HSPA) is introduced into a universal mobile telecommunication system (Universal Mobile Telecommunication System, UMTS), for improving spectrum efficiency. Further, in order to support a larger bandwidth and a higher rate, a multi-carrier supporting system is further introduced into the UMTS.
A chip rate of a traditional UMTS system is 3.84MHz, and a single-carrier system is typically deployed on a 5MHz frequency bandwidth. If a multi-carrier system is considered, the UMTS may be deployed on an integral multiple of a 5MHz spectrum. However, spectrum resources owned by operators may be smaller than 5MHz or not an integral multiple of 5MHz. If the traditional UMTS system deployment is adopted, spectrum fragmentation may be caused to reduce spectrum utilization efficiency and waste the spectrum resources.

**SUMMARY**

The present invention provides a method, a network side device and an user equipment of variable bandwidth, which may improve utilization efficiency of a bandwidth and reduce waste of the bandwidth.
In a first aspect, the present invention provides a method of, including:

configuring a first type carrier and a second type carrier, wherein a chip rate of the first type carrier is 3.84 mega chips per second Mcps, a chip rate of the second type carrier is P*3.84Mcps, and P is smaller than 1 and larger than 0; using the first type carrier and/or the second type carrier for communication..
In combination with the first aspect, in a first possible implementation manner,
a transmission time interval TTI length of at least one cell corresponding to the first type carrier is the same as a TTI length of at least one cell corresponding to the second type carrier..

In combination with the first aspect or the first possible implementation manner of the first aspect, in a second possible implementation manner,
a cell identifier ID of at least one cell corresponding to the second type carrier is the same as a ID of at least one cell corresponding to the first type carrier.4
In combination with the first aspect or any above-mentioned possible implementation manner of the first aspect, in a third possible implementation manner,
a primary scrambling sequence used by at least one cell corresponding to the second type carrier is the same as a primary scrambling sequence of at least one cell corresponding to the first type carrier; or
a primary scrambling sequence used by at least one cell corresponding to the second type carrier is determined according to a primary scrambling sequence of at least one cell corresponding to the first type carrier.
In combination with the first aspect or any above-mentioned possible implementation manner of the first aspect, in a fourth possible implementation manner,
the chip rate of the second type carrier or the number of the second type carriers is carried by a radio resource control RRC signaling of the first type carrier.
In combination with the first aspect or any above-mentioned possible implementation manner of the first aspect, in a fifth possible implementation manner,
a spreading factor adopted by a high speed physical downlink shared channel HS-PDSCH of a downlink carrier of the second type carrier is 16, and a spreading factor of a pilot channel of the downlink carrier of the second type carrier is P times of a spreading factor of an equivalent pilot channel of a downlink carrier of the first type carrier.
In combination with the first aspect or any above-mentioned possible implementation manner of the first aspect, in a sixth possible implementation manner,
a spreading factor adopted by an enhanced dedicated physical data channel E-DPDCH of an uplink carrier of the second type carrier is one or multiple of spreading factors capable of being adopted by an uplink carrier of the first type carrier.
In combination with the first aspect or any above-mentioned possible implementation manner of the first aspect, in a seventh possible implementation manner,
a spreading factor of a pilot channel of an uplink carrier of the second type carrier is P times of a spreading factor of an equivalent pilot channel of an uplink carrier of the first type carrier.

In combination with the first aspect or any above-mentioned possible implementation manner of the first aspect, in an eighth possible implementation manner,
only a HS-PDSCH and a first type pilot channel are carried on a downlink carrier of the second type carrier.

In combination with the eighth possible implementation manner of the first aspect, in a ninth possible implementation manner,
the first type pilot channel is a common pilot channel, a pilot channel for data demodulation or a pilot channel for measurement.

In combination with the first aspect or any above-mentioned possible implementation manner of the first aspect, in a tenth possible implementation manner,
only an E-DPDCH and a second type pilot channel are carried on the uplink carrier of the second type carrier.

In combination with the tenth possible implementation manner of the first aspect, in an eleventh possible implementation manner,
the second type pilot channel is a dedicated pilot channel.

In combination with the first aspect or any above-mentioned possible implementation manner of the first aspect, in a twelfth possible implementation manner,
a spreading factor of a part or all of channels for random access of the second type carrier is P times of a spreading factor of a part or all of equivalent channels for random access of the first type carrier.

In combination with the first aspect or any above-mentioned possible implementation manner of the first aspect, in a thirteenth possible implementation manner,
a spreading factor of a control channel and/or a common channel of the second type carrier is P times of a spreading factor of an equivalent control channel and/or an equivalent common channel of the first type carrier.

In a second aspect, the present invention provides a variable bandwidth method, including:

obtaining the configuration information of a first type carrier and the configuration information of a second type carrier;
using the first type carrier and/or the second type carrier for communication, wherein a chip rate of the first type carrier is 3.84 mega chips per second Mcps, a chip rate of the second type carrier is P*3.84Mcps, and P is smaller than 1 and larger than 0.

In combination with the second aspect, in a first possible implementation manner,
a transmission time interval TTI length of at least one cell corresponding to the first type carrier is the same as a TTI length of at least one cell corresponding to the second type carrier.

In combination with the second aspect or the first possible implementation manner of the second aspect, in a second possible implementation manner,
an identifier ID of at least one cell corresponding to the second type carrier is the same as an ID of at least one cell corresponding to the first type carrier.

In combination with the second aspect or any above-mentioned possible implementation manner of the second aspect, in a third possible implementation manner,
a primary scrambling sequence used by at least one cell corresponding to the second type carrier is the same as a primary scrambling sequence of at least one cell corresponding to the first type carrier; or
a primary scrambling sequence used by at least one cell corresponding to the second type carrier is determined according to a primary scrambling sequence of at least one cell corresponding to the first type carrier.

In combination with the second aspect or any above-mentioned possible implementation manner of the second aspect, in a fourth possible implementation manner,
the chip rate of the second type carrier or the number of the second type carriers is carried by a radio resource control RRC signaling of the first type carrier.

In combination with the second aspect or any above-mentioned possible implementation manner of the second aspect, in a fifth possible implementation manner,
a spreading factor adopted by a high speed physical downlink shared channel HS-PDSCH of a downlink carrier of the second type carrier is 16, and a spreading factor of a pilot channel of the downlink carrier of the second type carrier is P times of a spreading factor of an equivalent pilot channel of a downlink carrier of the first type carrier.

In combination with the second aspect or any above-mentioned possible implementation manner of the second aspect, in a sixth possible implementation manner,
a spreading factor adopted by an enhanced dedicated physical data channel E-DPDCH of an uplink carrier of the second type carrier is one or multiple of spreading factors capable of being adopted by an uplink carrier of the first type carrier.

In combination with the second aspect or any above-mentioned possible implementation manner of the second aspect, in a seventh possible implementation manner,
a spreading factor of a control channel and/or a common channel of the second type carrier is P times of a spreading factor of an equivalent control channel and/or an equivalent common channel of the first type carrier.

In combination with the second aspect or any above-mentioned possible implementation manner of the second aspect, in an eighth possible implementation manner,

only a HS-PDSCH and a first type pilot channel are carried on a downlink carrier of the second type carrier.

In combination with the eighth possible implementation manner of the second aspect, in a ninth possible implementation manner,

the first type pilot channel is a common pilot channel, a pilot channel for data demodulation or a pilot channel for measurement.

In combination with the second aspect or any above-mentioned possible implementation manner of the second aspect, in a tenth possible implementation manner,

only an E-DPDCH and a second type pilot channel are carried on an uplink carrier of the second type carrier.

In combination with the tenth possible implementation manner of the second aspect, in an eleventh possible implementation manner,

the second type pilot channel is a dedicated pilot channel.

In combination with the second aspect or any above-mentioned possible implementation manner of the second aspect, in a twelfth possible implementation manner,

a spreading factor of a part or all of channels for random access of the second type carrier is P times of a spreading factor of a part or all of equivalent channels for random access of the first type carrier.

In combination with the second aspect or any above-mentioned possible implementation manner of the second aspect, in a thirteenth possible implementation manner,

a spreading factor of a control channel and/or a common channel of the second type carrier is P times of a spreading factor of an equivalent control channel and/or an equivalent common channel of the first type carrier.

In a third aspect, the present invention provides a network side device, including:

a control unit, configured to configure a first type carrier and a second type carrier, wherein a chip rate of the first type carrier is 3.84 mega chips per second Mcps, a chip rate of the second type carrier is P*3.84Mcps, and P is smaller than 1 and larger than 0;

a communication unit, configured to use the first type carrier and/or the second type carrier for communication.

In combination with the third aspect, in a first possible implementation manner,

a transmission time interval TTI length of at least one cell corresponding to the first type carrier is the same as a TTI length of at least one cell corresponding to the second type carrier.

In combination with the third aspect or the first possible implementation manner of the third aspect, in a second possible implementation manner,

an identifier ID of at least one cell corresponding to the second type carrier is the same as an ID of at least one cell corresponding to the first type carrier.

In combination with the third aspect or any above-mentioned possible implementation manner of the third aspect, in a third possible implementation manner,

a primary scrambling sequence used by at least one cell corresponding to the second type carrier is the same as a primary scrambling sequence of at least one cell corresponding to the first type carrier; or

a primary scrambling sequence used by at least one cell corresponding to the second type carrier is determined according to a primary scrambling sequence of at least one cell corresponding to the first type carrier.

In combination with the third aspect or any above-mentioned possible implementation manner of the third aspect, in a fourth possible implementation manner,

the chip rate of the second type carrier or the number of the second type carriers is carried by a radio resource control RRC signaling of the first type carrier.

In combination with the third aspect or any above-mentioned possible implementation manner of the third aspect, in a fifth possible implementation manner,

a spreading factor adopted by a high speed physical downlink shared channel HS-PDSCH of a downlink carrier of the second type carrier is 16, and a spreading factor of a pilot channel of the downlink carrier of the second type carrier is P times of a spreading factor of an equivalent pilot channel of a downlink carrier of the first type carrier.

In combination with the third aspect or any above-mentioned possible implementation manner of the third aspect, in a sixth possible implementation manner,

a spreading factor adopted by an enhanced dedicated physical data channel E-DPDCH of an uplink carrier of the second type carrier is one or multiple of spreading factors capable of being adopted by an uplink carrier of the first type carrier.

In combination with the third aspect or any above-mentioned possible implementation manner of the third aspect, in a seventh possible implementation manner,

a spreading factor of a pilot channel of an uplink carrier of the second type carrier is P times of a spreading factor of an equivalent pilot channel of an uplink carrier of the first type carrier.

In combination with the third aspect or any above-mentioned possible implementation manner of the third aspect, in an eighth possible implementation manner,

only a HS-PDSCH and a first type pilot channel are carried on a downlink carrier of the second type carrier.

In combination with the eighth possible implementation manner of the third aspect, in a ninth possible implementation manner,

the first type pilot channel is a common pilot channel, a pilot channel for data demodulation or a pilot channel for measurement.

In combination with the third aspect or any above-mentioned possible implementation manner of the third aspect, in a tenth possible implementation manner,

only an E-DPDCH and a second type pilot channel are carried on an uplink carrier of the second type carrier.

In combination with the tenth possible implementation manner of the third aspect, in an eleventh possible implementation manner,

the second type pilot channel is a dedicated pilot channel.

In combination with the third aspect or any above-mentioned possible implementation manner of the third aspect, in a twelfth possible implementation manner,

a spreading factor of a part or all of channels for random access of the second type carrier is P times of a spreading factor of a part or all of equivalent channels for random access of the first type carrier.

In combination with the third aspect or any above-mentioned possible implementation manner of the third aspect, in a thirteenth possible implementation manner,

a spreading factor of a control channel and/or a common channel of the second type carrier is P times of spreading factor of an equivalent control channel and/or an equivalent common channel of the first type carrier.

In a fourth aspect, the present invention provides user equipment, including:

an obtaining unit, configured to obtain configuration information of a first type carrier and configuration information of a second type carrier;

a communication unit, configured to use the first type carrier and/or the second type carrier for communication, wherein a chip rate of the first type carrier is 3.84 mega chips per second Mcps, a chip rate of the second type carrier is P*3.84Mcps, and P is smaller than 1 and larger than 0.

In combination with the fourth aspect, in a first possible implementation manner,

a transmission time interval TTI length of at least one cell corresponding to the first type carrier is the same as a TTI length of at least one cell corresponding to the second type carrier.

In combination with the first possible implementation manner of the fourth aspect, in a second possible implementation manner,

an identifier ID of at least one cell corresponding to the second type carrier is the same as an ID of at least one cell corresponding to the first type carrier.

In combination with the fourth aspect or any above-mentioned possible implementation manner of the fourth aspect, in a third possible implementation manner,

at least one primary scrambling sequence which is used corresponding to the second type carrier is the same as a primary scrambling sequence of at least one cell corresponding to the first type carrier; or

at least one primary scrambling sequence which is used corresponding to the second type carrier is determined according to a primary scrambling sequence of at least one cell corresponding to the first type carrier.

In combination with the fourth aspect or any above-mentioned possible implementation manner of the fourth aspect, in a fourth possible implementation manner,

the chip rate of the second type carrier or the number of the second type carriers is carried by a radio resource control RRC signaling of the first type carrier.

In combination with the fourth aspect or any above-mentioned possible implementation manner of the fourth aspect, in a fifth possible implementation manner,

a spreading factor adopted by a high speed physical downlink shared channel HS-PDSCH of a downlink carrier of the second type carrier is 16, and a spreading factor of a pilot channel of the downlink carrier of the second type carrier is P times of a spreading factor of an equivalent pilot channel of a downlink carrier of the first type carrier.

In combination with the fourth aspect or any above-mentioned possible implementation manner of the fourth aspect, in a sixth possible implementation manner,

a spreading factor adopted by an enhanced dedicated physical data channel E-DPDCH of an uplink carrier of the second type carrier is one or multiple of spreading factors capable of being adopted by an uplink carrier of the first type carrier.

In combination with the fourth aspect or any above-mentioned possible implementation manner of the fourth aspect, in a seventh possible implementation manner,

a spreading factor of a pilot channel of an uplink carrier of the second type carrier is P times of a spreading factor of an equivalent pilot channel of an uplink carrier of the first type carrier.

In combination with the fourth aspect or any above-mentioned possible implementation manner of the fourth aspect, in an eighth possible implementation manner,
only a HS-PDSCH and a first type pilot channel are carried on a downlink carrier of the second type carrier.

In combination with the eighth possible implementation manner of the fourth aspect, in a ninth possible implementation manner,
the first type pilot channel is a common pilot channel, a pilot channel for data demodulation or a pilot channel for measurement.

In combination with the fourth aspect or any above-mentioned possible implementation manner of the fourth aspect, in a tenth possible implementation manner,
only an E-DPDCH and a second type pilot channel are carried on an uplink carrier of the second type carrier.

In combination with the tenth possible implementation manner of the fourth aspect, in an eleventh possible implementation manner,
the second type pilot channel is a dedicated pilot channel.

In combination with the fourth aspect or any above-mentioned possible implementation manner of the fourth aspect, in a twelfth possible implementation manner,
a spreading factor of a part or all of channels for random access of the second type carrier is P times of a spreading factor of a part or all of equivalent channels for random access of the first type carrier.

In combination with the fourth aspect or any above-mentioned possible implementation manner of the fourth aspect, in a thirteenth possible implementation manner,
a spreading factor of a control channel and/or a common channel of the second type carrier is P times of a spreading factor of an equivalent control channel and/or an equivalent common channel of the first type carrier.

According to the present invention, the first type carrier and the second type carrier are configured, wherein the chip rate of the first type carrier is 3.8Mcps, the chip rate of the second type carrier is P*3.84Mcps, and P is smaller than 1 and larger than 0; and the first type carrier and/or the second type carrier are used for communication. In this way, since the chip rate of the second type carrier is low and occupied bandwidth is small, the second type carrier may be suitable for non-standard bandwidth, thus the utilization efficiency of the bandwidth may be improved and the waste of the bandwidth may be reduced.

BRIEF DESCRIPTION OF DRAWINGS

To illustrate technical solutions in the embodiments of the present invention more clearly, a brief introduction on the accompanying drawings which are needed in the description of the embodiments is given below. Apparently, the accompanying drawings in the description below are merely some of the embodiments of the present invention, based on which other drawings may be obtained by those of ordinary skill in the art without any creative effort.

Fig.1 is a schematic diagram of a flow of a variable bandwidth in an embodiment of the present invention.
Fig.2 is a schematic diagram of a flow of a variable bandwidth in the present invention.
Fig.3 is a schematic block diagram of a network side device in the present invention.
Fig.4 is a schematic block diagram of user equipment in the present invention.

DETAILED DESCRIPTION OF THE EMBODIMENTS

A clear and complete description of technical solutions in the embodiments of the present invention will be given below, in combination with the accompanying drawings in the embodiments of the present invention. Apparently, the embodiments described are merely a part, but not all, of the embodiments of the present invention. All of other embodiments, obtained by those of ordinary skill in the art based on the embodiments of the present invention without any creative effort, fall into the protection scope of the present invention.

It should be understood that, the technical solutions of the embodiments of the present invention may be applied to various communication systems, for example: a global system of mobile communication (Global System of Mobile communication, referred to as "GSM") system, a code division multiple access (Code Division Multiple Access, referred to as "CDMA ") system, a wideband code division multiple access (Wideband Code Division Multiple Access, referred to as" WCDMA ") system, general packet radio service (General Packet Radio Service, referred to as the" GPRS "), a long term evolution (Long Term Evolution, referred to as" LTE ") system, an LTE frequency division duplex (Frequency Division Duplex, referred to as "FDD") system, an LTE time division duplex (Time Division Duplex, referred to as "TDD"), a universal mobile telecommunication system (Universal Mobile Telecommunication System, referred to as "UMTS"), and the like.

An user equipment (User Equipment, UE), also called a mobile terminal (Mobile Terminal, MT), a mobile user equipment and the like, may communicate with one or multiple core networks through a radio access network (e.g.,

Radio Access Network, RAN), the user equipment may be a mobile terminal, for example, a mobile telephone (or called a "cellular" telephone) and a computer having a mobile terminal, for example, portable, pocket, hand-held, computer inbuilt or vehicle-mounted mobile apparatuses.

A network side device may be a base station and may also be a base station controller.

The base station may be a base transceiver station (Base Transceiver Station, BTS) in GSM or CDMA, may also be a NodeB (NodeB) in WCDMA and may also be an eNB or an e-NodeB in LTE, and this is not limited in the present invention.

The base station controller may be a base station controller (Base Station Controller, BSC), may also be a radio network controller (Radio Network Controller, RNC) and may also be an eNB with an RNC function, and this is not limited in the present invention.

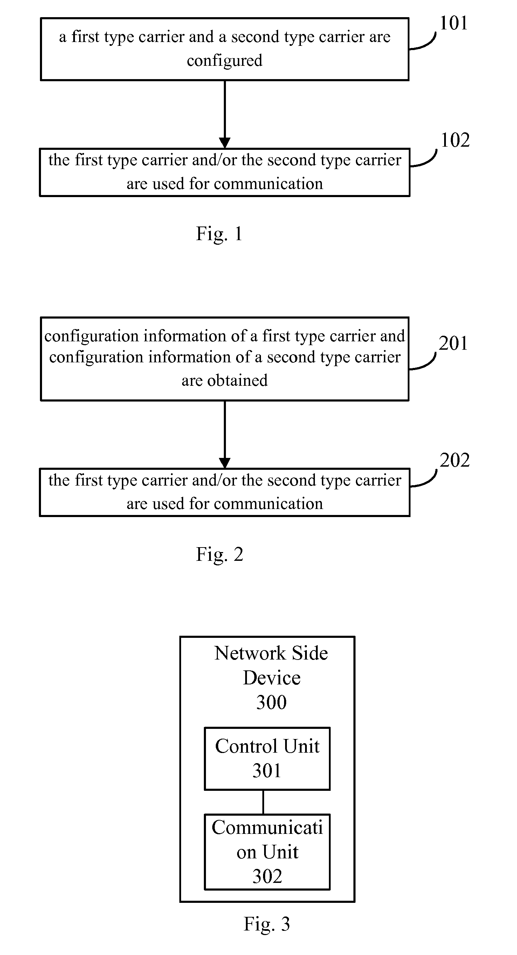

Fig.1 is a schematic diagram of a flow of a variable bandwidth in an embodiment of the present invention. The method of Fig.1 is implemented by a network side device.

101, a first type carrier and a second type carrier are configured, wherein a chip rate of the first type carrier is 3.8 mega chips per second (Mega Chip Per Second, Mcps), a chip rate of the second type carrier is P*3.84Mcps, and P is smaller than 1 and larger than 0.

102, the first type carrier and/or the second type carrier are used for communication.

According to the method as shown in Fig.1, since the chip rate of the second type carrier is low and occupied bandwidth is small, the second type carrier may be suitable for non-standard bandwidth, thus utilization efficiency of bandwidth may be improved and waste of the bandwidth may be reduced.

Optionally, the first type carrier and the second type carrier may be configured by a base station controller and may also be pre-configured in a base station.

Optionally, before the first type carrier and the second type carrier are used for communication, configuration information of the first type carrier and configuration information of the second type carrier may be sent to an user equipment, for enabling the user equipment to use the first type carrier and/or the second type carrier for communication according to the received configuration information.

Optionally, the method may further include: determining activation/deactivation configuration used for activating the first type carrier and/or the second type carrier, so as to use the first type carrier and/or the second type carrier for communication. Under a condition of including no activation/deactivation configuration, the first type carrier and the second type carrier are in an activated state by default, namely, the first type carrier and the second type carrier are used for communication.

Optionally, one or multiple first type carriers may be configured, and one or multiple second type carriers may also be configured.

Optionally, a typical value of P may be 1/2, 1/4 or 1/8. For example, one first type carrier with the chip rate of 3.84Mcps and two second type carriers with the chip rate of 0.96Mcps may be configured for downlink of the user equipment. For another example, two first type carriers with the chip rate of 3.84Mcps and one second type carrier with the chip rate of 1.92Mcps may be configured for downlink of the user equipment.

Optionally, a transmission time interval (Transmission Time Interval, TTI) length of at least one cell corresponding to the second type carrier may be 2ms and may also be 10ms.

Optionally, a TTI length capable of being used by at least one cell corresponding to the first type carrier is the same as a TTI length capable of being used by at least one cell corresponding to the second type carrier. In this way, it may be ensured that time selectivity resistance of the second type carrier is equivalent to that of the traditional UMTS, and time delay property thereof is equivalent to that of the traditional UMTS.

Optionally, an identifier (ID) of at least one cell corresponding to the second type carrier is the same as an ID of at least one cell corresponding to the first type carrier. In this way, cell planning complexity may be reduced as much as possible.

Optionally, a primary scrambling sequence used by at least one cell corresponding to the second type carrier is the same as a primary scrambling sequence of at least one cell corresponding to the first type carrier, or a primary scrambling sequence used by at least one cell corresponding to the second type carrier is determined according to a primary scrambling sequence of at least one cell corresponding to the first type carrier. In this way, the scrambling sequence of at least one cell corresponding to the first type carrier may be reused to reduce generation complexity of the scrambling sequence.

Specifically, the primary scrambling sequence used by at least one cell corresponding to the second type carrier may be completely the same as the primary scrambling sequence of at least one cell corresponding to the first type carrier, or is a part of the primary scrambling sequence of at least one cell corresponding to the first type carrier.

For example, the primary scrambling sequence of a cell corresponding to the first type carrier is:

$$S_{dl,0}(k) = Z_0(k) + jZ_0((k+131072)\bmod(2^{18}-1)), k = 0,1,...,38399$$ ,

wherein,

$$Z_n(i) = x((i+n)\bmod(2^{18}-1)) + y(i)\bmod 2, i = 0,1,...2^{18}-2 ,$$

$$x(i+18) = x(i+7) + x(i)\bmod 2, i = 0,1,...2^{18}-20 ,$$

$$y(i+18) = y(i+10) + y(i+7) + y(i+5) + y(i)\bmod 2, i = 0,1,...2^{18}-20 ,$$

$$x(0) = 1, x(1) = x(2) = ... = x(16) = x(17) = 0 ,$$

$$y(0) = y(1) = ... = y(16) = y(17) = 1,$$

mod refers to modulo.

Optionally, it may be configured that the primary scrambling sequence of at least one cell corresponding to the second type carrier is a part of the primary scrambling sequence of at least one cell corresponding to the first type carrier, for example, if the chip rate of the second type carrier is 0.96Mcps, and a length of the primary scrambling sequence of each radio frame is 9600, then the primary scrambling sequence of the cell corresponding to the second type carrier may be:

$$S_{dl,0}(k) = Z_0(k) + jZ_0((k+131072)\bmod(2^{18}-1)), k = 0,1,...,9599$$ .

Under this condition, the primary scrambling sequence of each radio frame is the same.

Optionally, it may be configured that the primary scrambling sequence of at least one cell corresponding to the second type carrier is the same as the primary scrambling sequence of at least one cell corresponding to the first type carrier. Specifically, it may be configured that the primary scrambling sequences of continuous A radio frames of the second type carrier are different, the primary scrambling sequences of the continuous A radio frames are merged to form the primary scrambling sequence of the first type carrier. For example, if the chip rate of the second type carrier is 0.96Mcps, and the length of the primary scrambling sequence of each radio frame is 9600, then the primary scrambling sequences of four radio frames may be merged to form the primary scrambling sequence of the first type carrier.

Optionally, the related configuration information of the second type carrier, for example, the chip rate of the second type carrier or the number of the second type carriers, is carried by a radio resource control (Radio Resource Control, RRC) signaling of the first type carrier. In this way, the user equipment may support a variable chip rate and variable bandwidth configuration. Specifically, the chip rate of the second type carrier may be indicated by the RRC signaling by using one or multiple bits. For example, 00 expresses that the chip rate of the second type carrier is 1.92Mcps, and 01 expresses that the chip rate of the second type carrier is 0.96Mcps, and so on. The number of the second type carriers may be indicated by N bitmaps, for example, 11000000 expresses two second type carriers are configured, and so on.

Optionally, a spreading factor adopted by a high speed physical downlink shared channel (High Speed Physical Downlink Shared Channel, HS-PDSCH) of a downlink carrier of the second type carrier is 16, and a spreading factor of a pilot channel of the downlink carrier of the second type carrier is P times of a spreading factor of an equivalent pilot channel of a downlink carrier of the first type carrier, wherein P is smaller than 1 and larger than 0. Wherein, equivalent refers to the same title, type or function. For example, a P-CPICH of the first type carrier is equivalent to a P-CPICH of the second type carrier, and a pilot channel for measurement of the first type carrier is equivalent to a pilot channel for measurement of the second type carrier. In this way, since the spreading factor adopted by the HS-PDSCH of the second type carrier is the same as that of the first type carrier, the second type carrier may support multi-user equipment scheduling flexibility similar to that of the first type carrier. Since the spreading factor of the pilot channel of the second type carrier is P times of the spreading factor of the equivalent pilot channel of the first type carrier, it may be ensured that a pilot symbol the same as that of the first type carrier is transmitted in the same frame or subframe to ensure channel estimation performance. Optionally, a typical value of P may be 1/2, 1/4 and 1/8.

Optionally, only a HS-PDSCH channel and a first type pilot channel are carried on a downlink carrier of the second type carrier. The first type pilot channel may be a common pilot channel, a pilot channel for demodulation or a pilot channel for measurement. For example, the first type pilot channel may be one or multiple of the following pilot channels: a primary common pilot channel (Primary Common Pilot Channel, P-CPICH), a secondary common pilot channel (Secondary Common Pilot Channel, S-CPICH), a demodulation common pilot channel (Demodulation Common Pilot Channel, D-CPICH), a channel bearing channel state reference information (Channel Status Information Reference Signal, CSI-RS) or channel state indicator pilot (Channel State Indicator Pilot, CSI-Pilot), and a channel bearing demodulation reference signal (Demodulation Reference Signal, DMRS) or demodulation pilot (Demodulation Pilot, DM-Pilot). In this way, the second type carrier only supports high speed data services, thus the spectrum utilization efficiency on the second type carrier may be effectively improved.

Optionally, a spreading factor adopted by an enhanced dedicated physical data channel (Enhanced Dedicated Physical Data Channel, E-DPDCH) of an uplink carrier of the second type carrier is one or multiple of spreading factors capable of being adopted by an uplink carrier of the first type carrier. In this way, since the spreading factor adopted by the E-DPDCH of the second type carrier is one or multiple of the spreading factors capable of being adopted by the first type carrier, a spreading sequence may be multiplexed to simplify the process.

Optionally, a spreading factor of a pilot channel of an uplink carrier of the second type carrier is P times of a spreading factor of an equivalent pilot channel of an uplink carrier of the first type carrier, wherein P is smaller than 1 and larger than 0. In this way, since the spreading factor of the pilot channel of the second type carrier is P times of the spreading factor of the equivalent pilot channel of the first type carrier, it may be ensured that a pilot symbol the same as that of the first type carrier is transmitted in the same subframe to ensure the channel estimation performance. Optionally, a typical value of P may be 1/2, 1/4 and 1/8.

Optionally, only an E-DPDCH and a second type pilot channel are carried on an uplink carrier of the second type carrier. The second type pilot channel may be a dedicated pilot channel. In this way, the second type carrier only supports high speed data services, thus spectrum utilization efficiency on the second type carrier may be effectively improved.

Optionally, a spreading factor of a part or all of channels for random access of the second type carrier is P times of a spreading factor of a part or all of equivalent channels for random access of the first type carrier, wherein P is smaller than 1 and larger than 0. A related channels for the random access may include an uplink physical random access channel (Physical Random Access Channel, PRACH), a downlink acquisition indicator channel (Acquisition Indicator Channel, AICH), etc. In this way, since the spreading factor of a part or all of channels for random access of the second type carrier is P times of the spreading factor of a part or all of equivalent channels for random access of the first type carrier, it may be ensured that quantity of information for random access in a random access process is the same as or partially the same as that of the traditional UMTS.

Optionally, a spreading factor of a control channel and/or a common channel of the second type carrier is P times of a spreading factor of an equivalent control channel and/or an equivalent common channel of the first type carrier, wherein P is smaller than 1 and larger than 0. The control channel and/or the common channel may be a high speed shared control channel (High Speed Shared Control Channel, HS-SCCH), etc.

Fig.2 is a schematic diagram of a flow of a variable bandwidth in the present invention. The method of Fig.2 is implemented by an user equipment.

201, configuration information of a first type carrier and configuration information of a second type carrier are obtained.

Optionally, the obtaining the configuration information of the first type carrier and the configuration information of the second type carrier may be as follows: receiving the configuration information of the first type carrier and the configuration information of the second type carrier sent by a network side device, or obtaining the configuration information of the first type carrier and the configuration information of the second type carrier preset in the user equipment.

202, the first type carrier and/or the second type carrier are used for communication, wherein a chip rate of the first type carrier is 3.84Mcps, a chip rate of the second type carrier is P*3.84Mcps, and P is smaller than 1 and larger than 0. Optionally, a typical value of P is 1/2, 1/4 and 1/8.

According to the method as shown in Fig.2, since the chip rate of the second type carrier is low and occupied bandwidth is small, the second type carrier may be suitable for non-standard bandwidth, thus utilization efficiency of bandwidth may be improved and waste of the bandwidth may be reduced.

Optionally, the method may further include: receiving activation/deactivation configuration used for activating the first type carrier and/or the second type carrier, so as to use the first type carrier and/or the second type carrier for communication. Under a condition of receiving no activation/deactivation configuration, the first type carrier and the second type carrier are in an activated state by default, namely, the first type carrier and the second type carrier are used for communication.

Optionally, a TTI length of the second type carrier may be 2ms and may also be 10ms.

Optionally, a TTI length capable of being used by at least one cell corresponding to the first type carrier is the same as a TTI length capable of being used by at least one cell corresponding to the second type carrier. In this way, it may be ensured that time selectivity resistance of the second type carrier is equivalent to that of the traditional UMTS, and the time delay property thereof is equivalent to that of the traditional UMTS.

Optionally, an identifier (ID) of at least one cell corresponding to the second type carrier is the same as an ID of at least one cell corresponding to the first type carrier. In this way, cell planning complexity may be reduced as much as possible.

Optionally, a primary scrambling sequence used by at least one cell corresponding to the second type carrier is the same as a primary scrambling sequence of at least one cell corresponding to the first type carrier, or a primary scrambling sequence used by at least one cell corresponding to the second type carrier is determined according to a primary scrambling sequence of at least one cell corresponding to the first type carrier. In this way, the scrambling sequence of at least one cell corresponding to the first type carrier may be reused to reduce generation complexity of the scrambling sequence.

Specifically, the primary scrambling sequence used by at least one cell corresponding to the second type carrier may be completely the same as the primary scrambling sequence of at least one cell corresponding to the first type carrier, or is a part of the primary scrambling sequence of at least one cell corresponding to the first type carrier.

For example, the primary scrambling sequence of a cell corresponding to the first type carrier is:

$$S_{dl,0}(k) = Z_0(k) + jZ_0((k+131072)\bmod(2^{18}-1)), k = 0,1,...,38399 ,$$

wherein,

$$Z_n(i) = x((i+n)\bmod(2^{18}-1)) + y(i)\bmod 2, i = 0,1,...2^{18}-2 ,$$

$$x(i+18) = x(i+7) + x(i)\bmod 2, i = 0,1,...2^{18}-20 ,$$

$$y(i+18) = y(i+10) + y(i+7) + y(i+5) + y(i)\bmod 2, i = 0,1,...2^{18}-20 ,$$

$$x(0) = 1, x(1) = x(2) = ... = x(16) = x(17) = 0 ,$$

$$y(0) = y(1) = ... = y(16) = y(17) = 1,$$

mod refers to modulo.

Optionally, the primary scrambling sequence of at least one cell corresponding to the second type carrier may be a part of the primary scrambling sequence of at least one cell corresponding to the first type carrier, for example, if the chip rate of the second type carrier is 0.96Mcps, and a length of the primary scrambling sequence of each radio frame is 9600, then the primary scrambling sequence of the cell corresponding to the second type carrier may be:

$$S_{dl,0}(k) = Z_0(k) + jZ_0((k+131072)\bmod(2^{18}-1)), k = 0,1,...,9599 .$$

Under this condition, the primary scrambling sequence of each radio frame is the same.

Optionally, the primary scrambling sequence of at least one cell corresponding to the second type carrier may be the same as the primary scrambling sequence of at least one cell corresponding to the first type carrier. Specifically, the second type carrier may adopt continuous A radio frames with different primary scrambling sequences, and the primary scrambling sequences of the continuous A radio frames are merged to form the primary scrambling sequence of the first type carrier. For example, if the chip rate of the second type carrier is 0.96Mcps, and the length of the primary scrambling sequence of each radio frame is 9600, then the primary scrambling sequences of four radio frames may be merged to form the primary scrambling sequence of the first type carrier.

Optionally, the chip rate of the second type carrier or the number of the second type carriers is carried by a RRC signaling of the first type carrier. In this way, the receiving end may support a variable chip rate and variable bandwidth configuration. Specifically, the chip rate of the second type carrier may be indicated by the RRC signaling by using one or multiple bits. For example, 00 expresses that the chip rate of the second type carrier is 1.92Mcps, and 01 expresses that the chip rate of the second type carrier is 0.96Mcps, and so on. The number of the second type carriers may be indicated by N bitmaps, for example, 11000000 expresses two second type carriers are configured, and so on.

Optionally, a spreading factor adopted by a high speed physical downlink shared channel (High Speed Physical Downlink Shared Channel, HS-PDSCH) of a downlink carrier of the second type carrier is 16, and a spreading factor of a pilot channel of the downlink carrier of the second type carrier is P times of a spreading factor of an equivalent pilot channel of a downlink carrier of the first type carrier, wherein P is smaller than 1 and larger than 0. Wherein, equivalent refers to the same title, type or function. For example, a P-CPICH of the first type carrier is equivalent to a P-CPICH of the second type carrier, and a pilot channel for measurement of the first type carrier is equivalent to a pilot channel for measurement of the second type carrier. In this way, since the spreading factor adopted by the HS-PDSCH of the second type carrier is the same as that of the first type carrier, the second type carrier may support multi-user equipment scheduling flexibility similar to that of the first type carrier. Since the spreading factor of the pilot channel of the second type carrier is P times of the spreading factor of the equivalent pilot channel of the first type carrier, it may be ensured that a pilot symbol the same as that of the first type carrier is transmitted in the same frame or subframe to ensure the channel estimation performance. Optionally, a typical value of P may be 1/2, 1/4 and 1/8.

Optionally, only a HS-PDSCH channel and a first type pilot channel are carried on a downlink carrier of the second type carrier. The first type pilot channel may be a common pilot channel, a pilot channel for demodulation or a pilot channel for measurement. For example, the first type pilot channel may be one or multiple of the following pilot channels: a primary common pilot channel (Primary Common Pilot Channel, P-CPICH), a secondary common pilot channel (Secondary Common Pilot Channel, S-CPICH), a demodulation common pilot channel (Demodulation Common Pilot Channel, D-CPICH), a channel bearing channel state reference information (Channel Status Information Reference Signal, CSI-RS) or channel state indicator pilot (Channel State Indicator Pilot, CSI-Pilot), and a channel bearing demodulation reference signal (Demodulation Reference Signal, DMRS) or demodulation pilot (Demodulation Pilot, DM-Pilot). In this way, the second type carrier only supports high speed data services, thus the spectrum utilization efficiency on the second type carrier may be effectively improved.

Optionally, a spreading factor adopted by an enhanced dedicated physical data channel (Enhanced Dedicated Physical Data Channel, E-DPDCH) of an uplink carrier of the second type carrier is one or multiple of spreading factors capable of being adopted by an uplink carrier of the first type carrier. In this way, since the spreading factor adopted by the E-DPDCH of the second type carrier is one or multiple of the spreading factors capable of being adopted by the first type carrier, a spreading sequence may be multiplexed to simplify the process.

Optionally, a spreading factor of a pilot channel of an uplink carrier of the second type carrier is P times of a spreading factor of an equivalent pilot channel of an uplink carrier of the first type carrier, wherein P is smaller than 1 and larger than 0. In this way, since the spreading factor of the pilot channel of the second type carrier is P times of the spreading factor of the equivalent pilot channel of the first type carrier, it may be ensured that a pilot symbol the same as that of the first type carrier is transmitted in the same subframe to ensure the channel estimation performance. Optionally, a typical value of P may be 1/2, 1/4 and 1/8.

Optionally, only an E-DPDCH and a second type pilot channel are carried on an uplink carrier of the second type carrier. The second type pilot channel may be a dedicated pilot channel. In this way, the second type carrier only supports high speed data services, thus spectrum utilization efficiency on the second type carrier may be effectively improved.

Optionally, a spreading factor of a part or all of channels for random access of the second type carrier is P times of a the spreading factor of a part or all of equivalent channels for random access of the first type carrier, wherein P is smaller than 1 and larger than 0. A related channels for the random access may include an uplink physical random access channel (Physical Random Access Channel, PRACH), a downlink acquisition indicator channel (Acquisition Indicator Channel, AICH), etc. In this way, since the spreading factor of a part or all of channels for random access of the second type carrier is P times of the spreading factor of a part or all of equivalent channels for random access of the first type carrier, it may be ensured that quantity of information for random access in a random access process is the same as or partially the same as that of the traditional UMTS.

Optionally, a spreading factor of a control channel and/or a common channel of the second type carrier is P times of a the spreading factor of an equivalent control channel and/or an equivalent common channel of the first type carrier, wherein P is smaller than 1 and larger than 0. The control channel and/or the common channel may be a high speed shared control channel (High Speed Shared Control Channel, HS-SCCH), etc.

Fig.3 is a schematic block diagram of a network side device in the present invention. The network side device 300 of Fig.3 may implement the steps implemented by the network side device in Fig.1. The network side device includes a control unit 301 and a communication unit 302.

The control unit 301 is configured to configure a first type carrier and a second type carrier, wherein a chip rate of the first type carrier is 3.8Mcps, a chip rate of the second type carrier is P*3.84Mcps, and P is smaller than 1 and larger than 0.

The communication unit 302 is configured to use the first type carrier and the second type carrier for communication.

According to the network side device 300 of Fig.3, since the chip rate of the second type carrier is low and occupied bandwidth is small, the second type carrier may be suitable for non-standard bandwidth, thus utilization efficiency of bandwidth may be improved and waste of the bandwidth may be reduced.

Optionally, before using the first type carrier and the second type carrier for communication, the communication unit 302 is further configured to send configuration information of the first type carrier and configuration information of the second type carrier to an user equipment, for enabling the user equipment to use the first type carrier and/or the second type carrier for communication.

Optionally, the control unit 301 is further configured to determine activation/deactivation configuration, wherein the activation/deactivation configuration is used for activating the first type carrier and/or the second type carrier, so as to use the first type carrier and/or the second type carrier for communication. Under a condition that the control unit 301 does not determine the activation/deactivation configuration, the first type carrier and the second type carrier are in an activated state by default, namely, the first type carrier and the second type carrier are used for communication.

Optionally, the control unit 301 may be configured to configure one or multiple first type carriers, and may also be configured to configure one or multiple second type carriers.

Optionally, a typical value of P may be 1/2, 1/4 or 1/8. For example, the control unit 301 may configure one first type carrier with the chip rate of 3.84Mcps and two second type carriers with the chip rate of 0.96Mcps for downlink of the user equipment. For another example, two first type carriers with the chip rate of 3.84Mcps and one second type carrier with the chip rate of 1.92Mcps may be configured for downlink of the user equipment.

Optionally, a transmission time interval (Transmission Time Interval, TTI) length of at least one cell corresponding to the second type carrier may be 2ms and may also be 10ms.

Optionally, a TTI length capable of being used by at least one cell corresponding to the first type carrier is the same as a TTI length capable of being used by at least one cell corresponding to the second type carrier. In this way, it may be ensured that time selectivity resistance of the second type carrier is equivalent to that of the traditional UMTS, and time delay property thereof is equivalent to that of the traditional UMTS.

Optionally, an identifier (ID) of at least one cell corresponding to the second type carrier is the same as an ID of at least one cell corresponding to the first type carrier. In this way, cell planning complexity may be reduced as much as possible.

Optionally, a primary scrambling sequence used by at least one cell corresponding to the second type carrier is the same as a primary scrambling sequence of at least one cell corresponding to the first type carrier, or a primary scrambling sequence used by at least one cell corresponding to the second type carrier is determined according to a primary scrambling sequence of at least one cell corresponding to the first type carrier. In this way, the scrambling sequence of at least one cell corresponding to the first type carrier may be reused to reduce generation complexity of the scrambling sequence.

Specifically, the primary scrambling sequence used by at least one cell corresponding to the second type carrier may be completely the same as the primary scrambling sequence of at least one cell corresponding to the first type carrier, or is a part of the primary scrambling sequence of at least one cell corresponding to the first type carrier.

For example, the primary scrambling sequence of a cell corresponding to the first type carrier is:

$$S_{dl,0}(k) = Z_0(k) + jZ_0((k+131072)\mod(2^{18}-1)), k = 0,1,...,38399 ,$$

wherein,

$$Z_n(i) = x((i+n)\mod(2^{18}-1)) + y(i)\mod 2, i = 0,1,...2^{18}-2 ,$$

$$x(i+18) = x(i+7) + x(i)\mod 2, i = 0,1,...2^{18}-20 ,$$

$$y(i+18) = y(i+10) + y(i+7) + y(i+5) + y(i)\mod 2, i = 0,1,...2^{18}-20 ,$$

$$x(0) = 1, x(1) = x(2) = \ldots = x(16) = x(17) = 0,$$

$$y(0) = y(1) = \ldots = y(16) = y(17) = 1,$$

mod refers to modulo.

Optionally, it may be configured that the primary scrambling sequence of at least one cell corresponding to the second type carrier is a part of the primary scrambling sequence of at least one cell corresponding to the first type carrier, for example, if the chip rate of the second type carrier is 0.96Mcps, and a length of the primary scrambling sequence of each radio frame is 9600, then the primary scrambling sequence of the cell corresponding to the second type carrier may be:

$$S_{dl,0}(k) = Z_0(k) + jZ_0((k+131072)\bmod(2^{18}-1)), k = 0,1,\ldots,9599 \qquad .$$

Under this condition, the primary scrambling sequence of each radio frame is the same.

Optionally, it may be configured that the primary scrambling sequence of at least one cell corresponding to the second type carrier is the same as the primary scrambling sequence of at least one cell corresponding to the first type carrier. Specifically, it may be configured that the primary scrambling sequences of continuous A radio frames of the second type carrier are different, the primary scrambling sequences of the continuous A radio frames are merged to form the primary scrambling sequence of the first type carrier. For example, if the chip rate of the second type carrier is 0.96Mcps, and the length of the primary scrambling sequence of each radio frame is 9600, then the primary scrambling sequences of four radio frames may be merged to form the primary scrambling sequence of the first type carrier.

Optionally, the related configuration information of the second type carrier, for example, the chip rate of the second type carrier or the number of the second type carriers, is carried by a RRC signaling of the first type carrier. In this way, the user equipment may support a variable chip rate and variable bandwidth configuration. Specifically, the chip rate of the second type carrier may be indicated by the RRC signaling by using one or multiple bits. For example, 00 expresses that the chip rate of the second type carrier is 1.92Mcps, and 01 expresses that the chip rate of the second type carrier is 0.96Mcps, and so on. The number of the second type carriers may be indicated by N bitmaps, for example, 11000000 expresses two second type carriers are configured, and so on.

Optionally, a spreading factor adopted by a high speed physical downlink shared channel (High Speed Physical Downlink Shared Channel, HS-PDSCH) of a downlink carrier of the second type carrier is 16, and a spreading factor of a pilot channel of the downlink carrier of the second type carrier is P times of a spreading factor of an equivalent pilot channel of a downlink carrier of the first type carrier, wherein P is smaller than 1 and larger than 0. Wherein, equivalent refers to the same title, type or function. For example, a P-CPICH of the first type carrier is equivalent to a P-CPICH of the second type carrier, and a pilot channel for measurement of the first type carrier is equivalent to a pilot channel for measurement of the second type carrier. In this way, since the spreading factor adopted by the HS-PDSCH of the second type carrier is the same as that of the first type carrier, the second type carrier may support multi-user equipment scheduling flexibility similar to that of the first type carrier. Since the spreading factor of the pilot channel of the second type carrier is P times of the spreading factor of the equivalent pilot channel of the first type carrier, it may be ensured that a pilot symbol the same as that of the first type carrier is transmitted in the same frame or subframe to ensure channel estimation performance. Optionally, a typical value of P may be 1/2, 1/4 and 1/8.

Optionally, only a HS-PDSCH channel and a first type pilot channel are carried on a downlink carrier of the second type carrier. The first type pilot channel may be a common pilot channel, a pilot channel for demodulation or a pilot channel for measurement. For example, the first type pilot channel may be one or multiple of the following pilot channels: a primary common pilot channel (Primary Common Pilot Channel, P-CPICH), a secondary common pilot channel (Secondary Common Pilot Channel, S-CPICH), a demodulation common pilot channel (Demodulation Common Pilot Channel, D-CPICH), a channel bearing channel state reference information (Channel Status Information Reference Signal, CSI-RS) or channel state indicator pilot (Channel State Indicator Pilot, CSI-Pilot), and a channel bearing demodulation reference signal (Demodulation Reference Signal, DMRS) or demodulation pilot (Demodulation Pilot, DM-Pilot). In this way, the second type carrier only supports high speed data services, thus the spectrum utilization efficiency on the second type carrier may be effectively improved.

Optionally, a spreading factor adopted by an enhanced dedicated physical data channel (Enhanced Dedicated Physical Data Channel, E-DPDCH) of an uplink carrier of the second type carrier is one or multiple of spreading factors capable of being adopted by an uplink carrier of the first type carrier. In this way, since the spreading factor adopted by the E-DPDCH of the second type carrier is one or multiple of the spreading factors capable of being adopted by the first type carrier, a spreading sequence may be multiplexed to simplify the process.

Optionally, a spreading factor of a pilot channel of an uplink carrier of the second type carrier is P times of a spreading factor of an equivalent pilot channel of an uplink carrier of the first type carrier, wherein P is smaller than 1 and larger than 0. In this way, since the spreading factor of the pilot channel of the second type carrier is P times of the spreading factor of the equivalent pilot channel of the first type carrier, it may be ensured that a pilot symbol the same as that of the first type carrier is transmitted in the same subframe to ensure the channel estimation performance. Optionally, a typical value of P may be 1/2, 1/4 and 1/8.

Optionally, only an E-DPDCH and a second type pilot channel are carried on an uplink carrier of the second type carrier. The second type pilot channel may be a dedicated pilot channel. In this way, the second type carrier only supports high speed data services, thus spectrum utilization efficiency on the second type carrier may be effectively improved.

Optionally, a spreading factor of a part or all of channels for random access of the second type carrier is P times of a spreading factor of a part or all of equivalent channels for random access of the first type carrier, wherein P is smaller than 1 and larger than 0. A related channels for the random access may include an uplink physical random access channel (Physical Random Access Channel, PRACH), a downlink acquisition indicator channel (Acquisition Indicator Channel, AICH), etc. In this way, since the spreading factor of a part or all of channels for random access of the second type carrier is P times of the spreading factor of a part or all of equivalent channels for random access of the first type carrier, it may be ensured that quantity of information for random access in a random access process is the same as or partially the same as that of the traditional UMTS.

Optionally, a spreading factor of a control channel and/or a common channel of the second type carrier is P times of a spreading factor of an equivalent control channel and/or an equivalent common channel of the first type carrier, wherein P is smaller than 1 and larger than 0. The control channel and/or the common channel may be a high speed shared control channel (High Speed Shared Control Channel, HS-SCCH), etc.

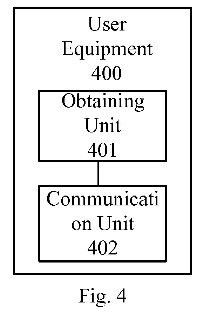

Fig.4 is a schematic block diagram of an user equipment in the present invention. The user equipment 400 of Fig.4 may implement the steps implemented by the user equipment in Fig.2. The user equipment includes an obtaining unit 401 and a communication unit 402.

The obtaining unit 401 is configured to obtain configuration information of a first type carrier and configuration information of a second type carrier.

The communication unit 402 is configured to use the first type carrier and/or the second type carrier for communication, wherein a chip rate of the first type carrier is 3.84Mcps, a chip rate of the second type carrier is P*3.84Mcps, and P is smaller than 1 and larger than 0. Optionally, a typical value of P is 1/2, 1/4 and 1/8.

Optionally, the communication unit 402 is further configured to receive the configuration information of the first type carrier and the configuration information of the second type carrier sent by a network side device. The obtaining unit 401 may be further configured to determine that the configuration information of the first type carrier and the configuration information of the second type carrier are the configuration information of the first type carrier and the configuration information of the second type carrier received by the communication unit 402 from the network side device. The obtaining unit 401 may also be configured to obtain the configuration information of the first type carrier and the configuration information of the second type carrier preset in the user equipment.

According to the user equipment 400 as shown in Fig.4, since the chip rate of the second type carrier is low and occupied bandwidth is small, the second type carrier may be suitable for non-standard bandwidth, thus utilization efficiency of bandwidth may be improved and waste of the bandwidth may be reduced.

Optionally, the communication unit 402 is further configured to receive activation/deactivation configuration. The control unit 401 is further configured to activate the first type carrier and/or the second type carrier and use the first type carrier and/or the second type carrier for communication. Under a condition of receiving no activation/deactivation configuration, the first type carrier and the second type carrier are in an activated state by default, namely, the first type carrier and the second type carrier are used for communication.

Optionally, a TTI length of the second type carrier may be 2ms and may also be 10ms.

Optionally, a TTI length capable of being used by at least one cell corresponding to the first type carrier is the same as a TTI length capable of being used by at least one cell corresponding to the second type carrier. In this way, it may be ensured that the time selectivity resistance of the second type carrier is equivalent to that of the traditional UMTS, and the time delay property thereof is equivalent to that of the traditional UMTS.

Optionally, an identifier (ID) of at least one cell corresponding to the second type carrier is the same as an ID of at least one cell corresponding to the first type carrier. In this way, cell planning complexity may be reduced as much as possible.

Optionally, a primary scrambling sequence used by at least one cell corresponding to the second type carrier is the same as a primary scrambling sequence of at least one cell corresponding to the first type carrier, or a primary scrambling sequence used by at least one cell corresponding to the second type carrier is determined according to a primary scrambling sequence of at least one cell corresponding to the first type carrier. In this way, the scrambling sequence of at least one cell corresponding to the first type carrier may be reused to reduce generation complexity of the scrambling sequence.

Specifically, the primary scrambling sequence used by at least one cell corresponding to the second type carrier may be completely the same as the primary scrambling sequence of at least one cell corresponding to the first type carrier, or is a part of the primary scrambling sequence of at least one cell corresponding to the first type carrier.

For example, the primary scrambling sequence of a cell corresponding to the first type carrier is:

$$S_{dl,0}(k) = Z_0(k) + jZ_0((k+131072)\operatorname{mod}(2^{18}-1)), k = 0,1,...,38399$$,

wherein,

$$Z_n(i) = x((i+n)\operatorname{mod}(2^{18}-1)) + y(i)\operatorname{mod}2, i = 0,1,...2^{18}-2,$$

$$x(i+18) = x(i+7) + x(i)\operatorname{mod}2, i = 0,1,...2^{18}-20,$$

$$y(i+18) = y(i+10) + y(i+7) + y(i+5) + y(i)\operatorname{mod}2, i = 0,1,...2^{18}-20,$$

$$x(0) = 1, x(1) = x(2) = ... = x(16) = x(17) = 0,$$

$$y(0) = y(1) = ... = y(16) = y(17) = 1,$$

mod refers to modulo.

Optionally, the primary scrambling sequence of at least one cell corresponding to the second type carrier may be a part of the primary scrambling sequence of at least one cell corresponding to the first type carrier, for example, if the chip rate of the second type carrier is 0.96Mcps, and a length of the primary scrambling sequence of each radio frame is 9600, then the primary scrambling sequence of the cell corresponding to the second type carrier may be:

$$S_{dl,0}(k) = Z_0(k) + jZ_0((k+131072)\operatorname{mod}(2^{18}-1)), k = 0,1,...,9599 \qquad.$$

Under this condition, the primary scrambling sequence of each radio frame is the same.

Optionally, the primary scrambling sequence of at least one cell corresponding to the second type carrier may be the same as the primary scrambling sequence of at least one cell corresponding to the first type carrier. Specifically, the second type carrier may adopt continuous A radio frames with different primary scrambling sequences, and the primary scrambling sequences of the continuous A radio frames are merged to form the primary scrambling sequence of the first type carrier. For example, if the chip rate of the second type carrier is 0.96Mcps, and the length of the primary scrambling sequence of each radio frame is 9600, then the primary scrambling sequences of four radio frames may be merged to form the primary scrambling sequence of the first type carrier.

Optionally, the chip rate of the second type carrier or the number of the second type carriers is carried by a RRC signaling of the first type carrier. In this way, the receiving end may support a variable chip rate and variable bandwidth configuration. Specifically, the chip rate of the second type carrier may be indicated by the RRC signaling by using one or multiple bits. For example, 00 expresses that the chip rate of the second type carrier is 1.92Mcps, and 01 expresses that the chip rate of the second type carrier is 0.96Mcps, and so on. The number of the second type carriers may be indicated by N bitmaps, for example, 11000000 expresses two second type carriers are configured, and so on.

Optionally, a spreading factor adopted by a high speed physical downlink shared channel (High Speed Physical Downlink Shared Channel, HS-PDSCH) of a downlink carrier of the second type carrier is 16, and a spreading factor of a pilot channel of the downlink carrier of the second type carrier is P times of a spreading factor of an equivalent pilot channel of a downlink carrier of the first type carrier, wherein P is smaller than 1 and larger than 0. Wherein, equivalent refers to the same title, type or function. For example, a P-CPICH of the first type carrier is equivalent to a P-CPICH of the second type carrier, and a pilot channel for measurement of the first type carrier is equivalent to a pilot channel for measurement of the second type carrier. In this way, since the spreading factor adopted by the HS-PDSCH of the second type carrier is the same as that of the first type carrier, the second type carrier may support multi-user equipment scheduling flexibility similar to that of the first type carrier. Since the spreading factor of the pilot channel of the second type carrier is P times of the spreading factor of the equivalent pilot channel of the first type carrier, it may be ensured that a pilot symbol the same as that of the first type carrier is transmitted in the same frame or subframe to ensure the channel estimation performance. Optionally, a typical value of P may be 1/2, 1/4 and 1/8.

Optionally, only a HS-PDSCH channel and a first type pilot channel are carried on a downlink carrier of the second type carrier, the first type pilot channel may be a common pilot channel, a pilot channel for demodulation or a pilot channel for measurement. For example, the first type pilot channel may be one or multiple of the following pilot channels: a primary common pilot channel (Primary Common Pilot Channel, P-CPICH), a secondary common pilot channel (Secondary Common Pilot Channel, S-CPICH), a demodulation common pilot channel (Demodulation Common Pilot Channel, D-CPICH), a channel bearing channel state reference information (Channel Status Information Reference Signal, CSI-RS) or channel state indicator pilot (Channel State Indicator Pilot, CSI-Pilot), and a channel bearing demodulation reference signal (Demodulation Reference Signal, DMRS) or demodulation pilot (Demodulation Pilot, DM-Pilot). In this way, the second type carrier only supports high speed data services, thus the spectrum utilization efficiency on the second type carrier may be effectively improved.

Optionally, a spreading factor adopted by an enhanced dedicated physical data channel (Enhanced Dedicated Physical Data Channel, E-DPDCH) of an uplink carrier of the second type carrier is one or multiple of spreading factors capable of being adopted by an uplink carrier of the first type carrier. In this way, since the spreading factor adopted by the E-DPDCH of the second type carrier is one or multiple of the spreading factors capable of being adopted by the first type carrier, a spreading sequence may be multiplexed to simplify the process.

Optionally, a spreading factor of a pilot channel of an uplink carrier of the second type carrier is P times of a spreading factor of an equivalent pilot channel of an uplink carrier of the first type carrier, wherein P is smaller than 1 and larger than 0. In this way, since the spreading factor of the pilot channel of the second type carrier is P times of the spreading factor of the equivalent pilot channel of the first type carrier, it may be ensured that a pilot symbol the same as that of the first type carrier is transmitted in the same subframe to ensure the channel estimation performance. Optionally, a typical value of P may be 1/2, 1/4 and 1/8.

Optionally, only an E-DPDCH and a second type pilot channel are carried on an uplink carrier of the second type carrier. The second type pilot channel may be a dedicated pilot channel. In this way, the second type carrier only supports high speed data services, thus spectrum utilization efficiency on the second type carrier may be effectively improved.

Optionally, a spreading factor of a part or all of channels for random access of the second type carrier is P times of a spreading factor of a part or all of equivalent channels for random access of the first type carrier, wherein P is smaller than 1 and larger than 0. A related channels for the random access may include an uplink physical random access channel (Physical Random Access Channel, PRACH), a downlink acquisition indicator channel (Acquisition Indicator Channel, AICH), etc. In this way, since the spreading factor of a part or all of channels for random access of the second type carrier is P times of the spreading factor of a part or all of equivalent channels for random access of the first type carrier, it may be ensured that quantity of information for random access in a random access process is the same as or partially the same as that of the traditional UMTS.

Optionally, a spreading factor of a control channel and/or a common channel of the second type carrier is P times of a spreading factor of an equivalent control channel and/or an equivalent common channel of the first type carrier, wherein P is smaller than 1 and larger than 0. The control channel and/or the common channel may be a high speed shared control channel (High Speed Shared Control Channel, HS-SCCH), etc.

Optionally, the present invention provides a network side device 500, and the network side device 500 may implement the steps implemented by the network side device in Fig.1. The network side device includes a processor 501 and a transceiver 502.

The processor 501 is configured to configure a first type carrier and a second type carrier, wherein a chip rate of the first type carrier is 3.8Mcps, a chip rate of the second type carrier is P*3.84Mcps, and P is smaller than 1 and larger than 0.

The transceiver 502 is configured to use the first type carrier and the second type carrier for communication.

Under a condition that the network side device 500 is used, since the chip rate of the second type carrier is low and occupied bandwidth is small, the second type carrier may be suitable for non-standard bandwidth, thus utilization efficiency of bandwidth may be improved and waste of the bandwidth may be reduced.

Optionally, before using the first type carrier and the second type carrier for communication, the transceiver 502 is further configured to send configuration information of the first type carrier and configuration information of the second type carrier to an user equipment, for enabling the user equipment to use the first type carrier and/or the second type carrier for communication.

Optionally, the processor 501 is further configured to determine activation/deactivation configuration, wherein the activation/deactivation configuration is used for activating the first type carrier and/or the second type carrier, so as to use the first type carrier and/or the second type carrier for communication. Under a condition that the processor 501 does not determine the activation/deactivation configuration, the first type carrier and the second type carrier are in an activated state by default, namely, the first type carrier and the second type carrier are used for communication.

Optionally, the processor 501 may be configured to configure one or multiple first type carriers, and may also be configured to configure one or multiple second type carriers.

Optionally, a typical value of P may be 1/2, 1/4 or 1/8. For example, the processor 501 may configure one first type carrier with the chip rate of 3.84Mcps and two second type carriers with the chip rate of 0.96Mcps for downlink of the user equipment. For another example, two first type carriers with the chip rate of 3.84Mcps and one second type carrier with the chip rate of 1.92Mcps may be configured for downlink of the user equipment.

Optionally, a transmission time interval (Transmission Time Interval, TTI) length of at least one cell corresponding to the second type carrier may be 2ms and may also be 10ms.

Optionally, a TTI length capable of being used by at least one cell corresponding to the first type carrier is the same as a TTI length capable of being used by at least one cell corresponding to the second type carrier. In this way, it may be ensured that the time selectivity resistance of the second type carrier is equivalent to that of the traditional UMTS, and time delay property thereof is equivalent to that of the traditional UMTS.

Optionally, an identifier (ID) of at least one cell corresponding to the second type carrier is the same as an ID of at least one cell corresponding to the first type carrier. In this way, the cell planning complexity may be reduced as much as possible.

Optionally, a primary scrambling sequence used by at least one cell corresponding to the second type carrier is the same as a primary scrambling sequence of at least one cell corresponding to the first type carrier, or a primary scrambling sequence used by at least one cell corresponding to the second type carrier is determined according to a primary scrambling sequence of at least one cell corresponding to the first type carrier. In this way, the scrambling sequence of at least one cell corresponding to the first type carrier may be reused to reduce the generation complexity of the scrambling sequence.

Specifically, the primary scrambling sequence used by at least one cell corresponding to the second type carrier may be completely the same as the primary scrambling sequence of at least one cell corresponding to the first type carrier, or is a part of the primary scrambling sequence of at least one cell corresponding to the first type carrier.

For example, the primary scrambling sequence of a cell corresponding to the first type carrier is:

$$S_{dl,0}(k) = Z_0(k) + jZ_0((k+131072)\mod(2^{18}-1)), k = 0,1,...,38399$$

wherein,

$$Z_n(i) = x((i+n)\mod(2^{18}-1)) + y(i)\mod 2, i = 0,1,...2^{18}-2,$$

$$x(i+18) = x(i+7) + x(i)\mod 2, i = 0,1,...2^{18}-20,$$

$$y(i+18) = y(i+10) + y(i+7) + y(i+5) + y(i)\mod 2, i = 0,1,...2^{18}-20,$$

$$x(0) = 1, x(1) = x(2) = ... = x(16) = x(17) = 0,$$

$$y(0) = y(1) = ... = y(16) = y(17) = 1,$$

mod refers to modulo.

Optionally, it may be configured that the primary scrambling sequence of at least one cell corresponding to the second type carrier is a part of the primary scrambling sequence of at least one cell corresponding to the first type carrier, for example, if the chip rate of the second type carrier is 0.96Mcps, and a length of the primary scrambling sequence of each radio frame is 9600, then the primary scrambling sequence of the cell corresponding to the second type carrier may be:

$$S_{dl,0}(k) = Z_0(k) + jZ_0((k+131072)\bmod(2^{18}-1)), k = 0,1,...,9599 \qquad .$$

Under this condition, the primary scrambling sequence of each radio frame is the same.

Optionally, it may be configured that the primary scrambling sequence of at least one cell corresponding to the second type carrier is the same as the primary scrambling sequence of at least one cell corresponding to the first type carrier. Specifically, it may be configured that the primary scrambling sequences of continuous A radio frames of the second type carrier are different, the primary scrambling sequences of the continuous A radio frames are merged to form the primary scrambling sequence of the first type carrier. For example, if the chip rate of the second type carrier is 0.96Mcps, and the length of the primary scrambling sequence of each radio frame is 9600, then the primary scrambling sequences of four radio frames may be merged to form the primary scrambling sequence of the first type carrier.

Optionally, the related configuration information of the second type carrier, for example, the chip rate of the second type carrier or the number of the second type carriers, is carried by a RRC signaling of the first type carrier. In this way, the user equipment may support a variable chip rate and variable bandwidth configuration. Specifically, the chip rate of the second type carrier may be indicated by the RRC signaling by using one or multiple bits. For example, 00 expresses that the chip rate of the second type carrier is 1.92Mcps, and 01 expresses that the chip rate of the second type carrier is 0.96Mcps, and so on. The number of the second type carriers may be indicated by N bitmaps, for example, 11000000 expresses two second type carriers are configured, and so on.

Optionally, a spreading factor adopted by a high speed physical downlink shared channel (High Speed Physical Downlink Shared Channel, HS-PDSCH) of a downlink carrier of the second type carrier is 16, and a spreading factor of a pilot channel of the downlink carrier of the second type carrier is P times of a spreading factor of an equivalent pilot channel of a downlink carrier of the first type carrier, wherein P is smaller than 1 and larger than 0. Wherein, equivalent refers to the same title, type or function. For example, a P-CPICH of the first type carrier is equivalent to a P-CPICH of the second type carrier, and a pilot channel for measurement of the first type carrier is equivalent to a pilot channel for measurement of the second type carrier. In this way, since the spreading factor adopted by the HS-PDSCH of the second type carrier is the same as that of the first type carrier, the second type carrier may support multi-user equipment scheduling flexibility similar to that of the first type carrier. Since the spreading factor of the pilot channel of the second type carrier is P times of the spreading factor of the equivalent pilot channel of the first type carrier, it may be ensured that a pilot symbol the same as that of the first type carrier is transmitted in the same frame or subframe to ensure channel estimation performance. Optionally, a typical value of P may be 1/2, 1/4 and 1/8.

Optionally, only a HS-PDSCH channel and a first type pilot channel are carried on a downlink carrier of the second type carrier. The first type pilot channel may be a common pilot channel, a pilot channel for demodulation or a pilot channel for measurement. For example, the first type pilot channel may be one or multiple of the following pilot channels: a primary common pilot channel (Primary Common Pilot Channel, P-CPICH), a secondary common pilot channel (Secondary Common Pilot Channel, S-CPICH), a demodulation common pilot channel (Demodulation Common Pilot Channel, D-CPICH), a channel bearing channel state reference information (Channel Status Information Reference Signal, CSI-RS) or channel state indicator pilot (Channel State Indicator Pilot, CSI-Pilot), and a channel bearing demodulation reference signal (Demodulation Reference Signal, DMRS) or demodulation pilot (Demodulation Pilot, DM-Pilot). In this way, the second type carrier only supports high speed data services, thus the spectrum utilization efficiency on the second type carrier may be effectively improved.

Optionally, a spreading factor adopted by an enhanced dedicated physical data channel (Enhanced Dedicated Physical Data Channel, E-DPDCH) of an uplink carrier of the second type carrier is one or multiple of spreading factors capable of being adopted by an uplink carrier of the first type carrier. In this way, since a spreading factor adopted by the E-DPDCH of the second type carrier is one or multiple of the spreading factors capable of being adopted by the first type carrier, the spreading sequence may be multiplexed to simplify the process.

Optionally, a spreading factor of a pilot channel of an uplink carrier of the second type carrier is P times of a spreading factor of an equivalent pilot channel of an uplink carrier of the first type carrier, wherein P is smaller than 1 and larger than 0. In this way, since the spreading factor of the pilot channel of the second type carrier is P times of the spreading factor of the equivalent pilot channel of the first type carrier, it may be ensured that a pilot symbol the same as that of the first type carrier is transmitted in the same subframe to ensure the channel estimation performance. Optionally, a typical value of P may be 1/2, 1/4 and 1/8.

Optionally, only an E-DPDCH and a second type pilot channel are carried on an uplink carrier of the second type carrier. The second type pilot channel may be a dedicated pilot channel. In this way, the second type carrier only supports high speed data services, thus spectrum utilization efficiency on the second type carrier may be effectively improved.

Optionally, a spreading factor of a part or all of channels for random access of the second type carrier is P times of a spreading factor of a part or all of equivalent channels for random access of the first type carrier, wherein P is smaller than 1 and larger than 0. A related channels for the random access may include an uplink physical random access channel (Physical Random Access Channel, PRACH), a downlink acquisition indicator channel (Acquisition Indicator Channel, AICH), etc. In this way, since the spreading factor of a part or all of channels for random access of the second type carrier is P times of the spreading factor of a part or all of equivalent channels for random access of the first type carrier, it may be ensured that quantity of information for random access in a random access process is the same as or partially the same as that of the traditional UMTS.

Optionally, a spreading factor of a control channel and/or a common channel of the second type carrier is P times of a spreading factor of an equivalent control channel and/or an equivalent common channel of the first type carrier, wherein P is smaller than 1 and larger than 0. The control channel and/or the common channel may be a high speed shared control channel (High Speed Shared Control Channel, HS-SCCH), etc.

Optionally, the present invention provides an user equipment 600, and the user equipment 600 may implement the steps implemented by the user equipment in Fig.2. The user equipment includes a controller 601 and a transceiver 602.

The controller 601 is configured to obtain configuration information of a first type carrier and configuration information of a second type carrier.

The transceiver 602 is configured to use the first type carrier and/or the second type carrier for communication, wherein a chip rate of the first type carrier is 3.84Mcps, a chip rate of the second type carrier is P*3.84Mcps, and P is smaller than 1 and larger than 0. Optionally, a typical value of P is 1/2, 1/4 and 1/8.

Optionally, the transceiver 602 may be further configured to receive the configuration information of the first type carrier and the configuration information of the second type carrier sent by a network side device. The controller 601 may be further configured to determine that the configuration information of the first type carrier and the configuration information of the second type carrier are the configuration information of the first type carrier and the configuration information of the second type carrier received by the transceiver 602 from the network side device. The controller 601 may also be configured to obtain the configuration information of the first type carrier and the configuration information of the second type carrier preset in the user equipment.

Under a condition that the user equipment 600 is used, since the chip rate of the second type carrier is low and occupied bandwidth is small, the second type carrier may be suitable for non-standard bandwidth, thus utilization efficiency of bandwidth may be improved and waste of the bandwidth may be reduced.

Optionally, the transceiver 602 is further configured to receive activation/deactivation configuration. The processor 601 is further configured to activate the first type carrier and/or the second type carrier and use the first type carrier and/or the second type carrier for communication. Under a condition of receiving no activation/deactivation configuration, the first type carrier and the second type carrier are in an activated state by default, namely, the first type carrier and the second type carrier are used for communication.

Optionally, a TTI length of the second type carrier may be 2ms and may also be 10ms.

Optionally, a TTI length capable of being used by at least one cell corresponding to the first type carrier is the same as a TTI length capable of being used by at least one cell corresponding to the second type carrier. In this way, it may be ensured that the time selectivity resistance of the second type carrier is equivalent to that of the traditional UMTS, and the time delay property thereof is equivalent to that of the traditional UMTS.

Optionally, an identifier (ID) of at least one cell corresponding to the second type carrier is the same as an ID of at least one cell corresponding to the first type carrier. In this way, cell planning complexity may be reduced as much as possible.

Optionally, a primary scrambling sequence used by at least one cell corresponding to the second type carrier is the same as a primary scrambling sequence of at least one cell corresponding to the first type carrier, or a primary scrambling sequence used by at least one cell corresponding to the second type carrier is determined according to a primary scrambling sequence of at least one cell corresponding to the first type carrier. In this way, the scrambling sequence of at least one cell corresponding to the first type carrier may be reused to reduce generation complexity of the scrambling sequence.

Specifically, the primary scrambling sequence used by at least one cell corresponding to the second type carrier may be completely the same as the primary scrambling sequence of at least one cell corresponding to the first type carrier, or is a part of the primary scrambling sequence of at least one cell corresponding to the first type carrier.

For example, the primary scrambling sequence of a cell corresponding to the first type carrier is:

$$S_{dl,0}(k) = Z_0(k) + jZ_0((k+131072)\bmod(2^{18}-1)), k = 0,1,...,38399$$

,

wherein,

$$Z_n(i) = x((i+n) \bmod(2^{18}-1)) + y(i) \bmod 2, i = 0,1,...2^{18}-2 ,$$

$$x(i+18) = x(i+7) + x(i) \bmod 2, i = 0,1,...2^{18}-20 ,$$

$$y(i+18) = y(i+10) + y(i+7) + y(i+5) + y(i) \bmod 2, i = 0,1,...2^{18}-20 ,$$

$$x(0)=1, x(1)=x(2)=...=x(16)=x(17)=0 ,$$

$$y(0)=y(1)=...=y(16)=y(17)=1 ,$$

mod refers to modulo.

Optionally, the primary scrambling sequence of at least one cell corresponding to the second type carrier may be a part of the primary scrambling sequence of at least one cell corresponding to the first type carrier, for example, if the chip rate of the second type carrier is 0.96Mcps, and a length of the primary scrambling sequence of each radio frame is 9600, then the primary scrambling sequence of the cell corresponding to the second type carrier may be:

$$S_{dl,0}(k) = Z_0(k) + jZ_0((k+131072) \bmod(2^{18}-1)), k = 0,1,...,9599 \qquad .$$

Under this condition, the primary scrambling sequence of each radio frame is the same.

Optionally, the primary scrambling sequence of at least one cell corresponding to the second type carrier may be the same as the primary scrambling sequence of at least one cell corresponding to the first type carrier. Specifically, the second type carrier may adopt continuous A radio frames with different primary scrambling sequences, and the primary scrambling sequences of the continuous A radio frames are merged to form the primary scrambling sequence of the first type carrier. For example, if the chip rate of the second type carrier is 0.96Mcps, and the length of the primary scrambling sequence of each radio frame is 9600, then the primary scrambling sequences of four radio frames may be merged to form the primary scrambling sequence of the first type carrier.

Optionally, the chip rate of the second type carrier or the number of the second type carriers is carried by a RRC signaling of the first type carrier. In this way, the receiving end may support a variable chip rate and variable bandwidth configuration. Specifically, the chip rate of the second type carrier may be indicated by the RRC signaling by using one or multiple bits. For example, 00 expresses that the chip rate of the second type carrier is 1.92Mcps, and 01 expresses that the chip rate of the second type carrier is 0.96Mcps, and so on. The number of the second type carriers may be indicated by N bitmaps, for example, 11000000 expresses two second type carriers are configured, and so on.

Optionally, a spreading factor adopted by a high speed physical downlink shared channel (High Speed Physical Downlink Shared Channel, HS-PDSCH) of a downlink carrier of the second type carrier is 16, and a spreading factor of a pilot channel of the downlink carrier of the second type carrier is P times of a spreading factor of an equivalent pilot channel of a downlink carrier of the first type carrier, wherein P is smaller than 1 and larger than 0. Wherein, equivalent refers to the same title, type or function. For example, a P-CPICH of the first type carrier is equivalent to a P-CPICH of the second type carrier, and a pilot channel for measurement of the first type carrier is equivalent to a pilot channel for measurement of the second type carrier. In this way, since the spreading factor adopted by the HS-PDSCH of the second type carrier is the same as that of the first type carrier, the second type carrier may support multi-user equipment scheduling flexibility similar to that of the first type carrier. Since the spreading factor of the pilot channel of the second type carrier is P times of the spreading factor of the equivalent pilot channel of the first type carrier, it may be ensured that a pilot symbol the same as that of the first type carrier is transmitted in the same frame or subframe to ensure the channel estimation performance. Optionally, a typical value of P may be 1/2, 1/4 and 1/8.

Optionally, only a HS-PDSCH channel and a first type pilot channel are carried on a downlink carrier of the second type carrier. The first type pilot channel may be a common pilot channel, a pilot channel for demodulation or a pilot channel for measurement. For example, the first type pilot channel may be one or multiple of the following pilot channels: a primary common pilot channel (Primary Common Pilot Channel, P-CPICH), a secondary common pilot channel (Secondary Common Pilot Channel, S-CPICH), a demodulation common pilot channel (Demodulation Common Pilot Channel, D-CPICH), a channel bearing channel state reference information (Channel Status Information Reference Signal, CSI-RS) or channel state indicator pilot (Channel State Indicator Pilot, CSI-Pilot), and a channel bearing demodulation reference signal (Demodulation Reference Signal, DMRS) or demodulation pilot (Demodulation Pilot, DM-Pilot). In this way, the second type carrier only supports high speed data services, thus the spectrum utilization efficiency on the second type carrier may be effectively improved.

Optionally, a spreading factor adopted by an enhanced dedicated physical data channel (Enhanced Dedicated Physical Data Channel, E-DPDCH) of an uplink carrier of the second type carrier is one or multiple of spreading factors capable of being adopted by an uplink carrier of the first type carrier. In this way, since the spreading factor adopted by the E-DPDCH of the second type carrier is one or multiple of the spreading factors capable of being adopted by the first type carrier, a spreading sequence may be multiplexed to simplify the process.

Optionally, a spreading factor of a pilot channel of an uplink carrier of the second type carrier is P times of a spreading factor of an equivalent pilot channel of an uplink carrier of the first type carrier, wherein P is smaller than 1 and larger than 0. In this way, since the spreading factor of the pilot channel of the second type carrier is P times of the spreading factor of the equivalent pilot channel of the first type carrier, it may be ensured that a pilot symbol the same as that of the first type carrier is transmitted in the same subframe to ensure the channel estimation performance. Optionally, a typical value of P may be 1/2, 1/4 and 1/8.

Optionally, only an E-DPDCH and a second type pilot channel are carried on an uplink carrier of the second type carrier. The second type pilot channel may be a dedicated pilot channel. In this way, the second type carrier only supports high speed data services, thus spectrum utilization efficiency on the second type carrier may be effectively improved.

Optionally, a spreading factor of a part or all of channels for random access of the second type carrier is P times of a spreading factor of a part or all of equivalent channels for random access of the first type carrier, wherein P is smaller than 1 and larger than 0. A related channels for the random access may include an uplink physical random access channel (Physical Random Access Channel, PRACH), a downlink acquisition indicator channel (Acquisition Indicator Channel, AICH), etc. In this way, since the spreading factor of a part or all of channels for random access of the second type carrier is P times of the spreading factor of a part or all of equivalent channels for random access of the first type carrier, it may be ensured that the quantity of information for random access in a random access process is the same as or partially the same as that of the traditional UMTS.

Optionally, a spreading factor of a control channel and/or a common channel of the second type carrier is P times of a spreading factor of an equivalent control channel and/or an equivalent common channel of the first type carrier, wherein P is smaller than 1 and larger than 0. The control channel and/or the common channel may be a high speed shared control channel (High Speed Shared Control Channel, HS-SCCH), etc.

The present invention provides a communication system, including a network side device and an user equipment.

The network side device configures a first type carrier and a second type carrier and uses the first type carrier and/or the second type carrier to communicate with the user equipment. A specific configuration of the first type carrier and the second type carrier is as mentioned in the above-mentioned embodiments.

The user equipment obtains configuration information of the first type carrier and configuration information of the second type carrier, and uses the first type carrier and/or the second type carrier to communicate with the network side device.

Those of ordinary skills in the art may be aware that, units and algorithm steps of the examples described in the embodiments disclosed in this paper may be implemented by electronic hardware or a combination of computer software and electronic hardware. Whether these functions are implemented in the form of hardware or software is determined by specific applications and design constraint conditions of the technical solutions. Those skilled may implement the described functions by using different methods for each specific application, but this implementation should not be considered to be beyond the scope of the present invention.

Those skilled in the art to which the present invention pertains may clearly understand that, for convenience and concision of description, the specific working processes of the system, apparatus and units described above may refer to corresponding processes in the foregoing method embodiments, and will not be repeated redundantly herein.

In several embodiments provided in the application, it should be understood that, the disclosed system, apparatus and method may be implemented in other manners. For example, the apparatus embodiments described above are merely exemplary, e.g., the division of the units is only a logic function division, other division manners may exist in practical implementation, for example, multiple units or components may be combined or integrated to another system, or some features may be omitted or not implemented. From another point of view, the displayed or discussed mutual coupling or direct coupling or communication connection may be indirect coupling or communication connection of devices or units through some interfaces, and may be in electrical, mechanical or other forms.

The units described as separate components may be separated physically or not, components displayed as units may be physical units or not, namely, may be located in one place, or may be distributed on multiple network units. A part of or all of the units may be selected to realize the purposes of the technical solutions in the embodiments according to actual demand.

In addition, the functional units in the embodiments of the present invention may be integrated in a processing unit, or the units may singly exist physically, or two or more units are integrated in one unit.

If the function is implemented in the form of a software functional unit and is sold or used as an independent product, it may be stored in a computer readable storage medium. Based on this understanding, the technical solutions of the present invention substantially, or the part contributing to the prior art, or a part of the technical solutions may be implemented in the form of a software product, the computer software product is stored in a storage medium, and includes multiple instructions for enabling a computer device (may be a personnel computer, a server, or a network device, etc.) or a processor (processor) to execute all or part of the steps of the methods in the embodiments of the present invention. The foregoing storage medium includes a variety of media capable of storing program codes, such as a USB disk, a mobile hard disk, a read-only memory (ROM, Read-Only Memory), a random access memory (RAM, Random Access Memory), a magnetic disk, an optical disk or the like.

The foregoing descriptions are merely specific embodiments of the present invention, rather than limiting the protection scope of the present invention. Any skilled person who is familiar with this art could readily think of variations or substitutions within the disclosed technical scope of the present invention, and these variations or substitutions shall fall within the protection scope of the present invention. Accordingly, the protection scope of the claims should prevail over the protection scope of the present invention.

**Claims**

1. A method of variable bandwidth, comprising:

   configuring a first type carrier and a second type carrier, wherein a chip rate of the first type carrier is 3.84 mega chips per second Mcps, a chip rate of the second type carrier is P*3.84Mcps, and P is smaller than 1 and larger than 0;
   using the first type carrier and/or the second type carrier for communication.

2. The method according to claim 1, wherein,
   a transmission time interval TTI length of at least one cell corresponding to the first type carrier is the same as a TTI length of at least one cell corresponding to the second type carrier.

3. The method according to claim 1 or 2, wherein,
   a cell identifier ID of at least one cell corresponding to the second type carrier is the same as a ID of at least one cell corresponding to the first type carrier.

4. The method according to any one of claims 1-3, wherein,
   a primary scrambling sequence used by at least one cell corresponding to the second type carrier is the same as a primary scrambling sequence of at least one cell corresponding to the first type carrier; or
   a primary scrambling sequence used by at least one cell corresponding to the second type carrier is determined according to a primary scrambling sequence of at least one cell corresponding to the first type carrier.

5. The method according to any one of claims 1-4, wherein,
   the chip rate of the second type carrier or the number of the second type carriers is carried by a radio resource control RRC signaling of the first type carrier.

6. The method according to any one of claims 1-5, wherein,
   a spreading factor adopted by a high speed physical downlink shared channel HS-PDSCH of a downlink carrier of the second type carrier is 16, and a spreading factor of a pilot channel of the downlink carrier of the second type carrier is P times of a spreading factor of an equivalent pilot channel of a downlink carrier of the first type carrier.

7. The method according to any one of claims 1-6, wherein,
   a spreading factor adopted by an enhanced dedicated physical data channel E-DPDCH of an uplink carrier of the second type carrier is one or multiple of spreading factors capable of being adopted by an uplink carrier of the first type carrier.

8. The method according to any one of claims 1-7, wherein,
   a spreading factor of a pilot channel of an uplink carrier of the second type carrier is P times of a spreading factor of an equivalent pilot channel of an uplink carrier of the first type carrier.

9.  The method according to any one of claims 1-8, wherein,
    only a HS-PDSCH and a first type pilot channel are carried on a downlink carrier of the second type carrier.

10. The method according to claim 9, wherein,
    the first type pilot channel is a common pilot channel, a pilot channel for data demodulation or a pilot channel for measurement.

11. The method according to any one of claims 1-10, wherein,
    only an E-DPDCH and a second type pilot channel are carried on an uplink carrier of the second type carrier.

12. The method according to claim 11, wherein,
    the second type pilot channel is a dedicated pilot channel.

13. The method according to any one of claims 1-12, wherein,
    a spreading factor of a part or all of channels for random access of the second type carrier is P times of a spreading factor of a part or all of equivalent channels for random access of the first type carrier.

14. The method according to any one of claims 1-13, wherein,
    a spreading factor of a control channel and/or a common channel of the second type carrier is P times of a spreading factor of an equivalent control channel and/or an equivalent common channel of the first type carrier.

15. A method of variable bandwidth, comprising:

    obtaining configuration information of a first type carrier and configuration information of a second type carrier;
    using the first type carrier and/or the second type carrier for communication, wherein a chip rate of the first type carrier is 3.84 mega chips per second Mcps, and a chip rate of the second type carrier is P*3.84Mcps.

16. The method according to claim 15, wherein,
    a transmission time interval TTI length of at least one cell corresponding to the first type carrier is the same as a TTI length of at least one cell corresponding to the second type carrier.

17. The method according to claim 15 or 16, wherein,
    an identifier ID of at least one cell corresponding to the second type carrier is the same as an ID of at least one cell corresponding to the first type carrier.

18. The method according to any one of claims 15-17, wherein,
    a primary scrambling sequence used by at least one cell corresponding to the second type carrier is the same as a primary scrambling sequence of at least one cell corresponding to the first type carrier; or
    a primary scrambling sequence used by at least one cell corresponding to the second type carrier is determined according to a primary scrambling sequence of at least one cell corresponding to the first type carrier.

19. The method according to any one of claims 15-18, wherein,
    the chip rate of the second type carrier or the number of the second type carriers is carried by a radio resource control RRC signaling of the first type carrier.

20. The method according to any one of claims 15-19, wherein,
    a spreading factor adopted by a high speed physical downlink shared channel HS-PDSCH of a downlink carrier of the second type carrier is 16, and a spreading factor of a pilot channel of the downlink carrier of the second type carrier is P times of a spreading factor of an equivalent pilot channel of a downlink carrier of the first type carrier.

21. The method according to any one of claims 15-20, wherein,
    a spreading factor adopted by an enhanced dedicated physical data channel E-DPDCH of an uplink carrier of the second type carrier is one or multiple of spreading factors capable of being adopted by an uplink carrier of the first type carrier.

22. The method according to any one of claims 15-21, wherein,
    a spreading factor of a pilot channel of an uplink carrier of the second type carrier is P times of a spreading factor of an equivalent pilot channel of an uplink carrier of the first type carrier.

23. The method according to any one of claims 15-22, wherein,
   only a HS-PDSCH and a first type pilot channel are carried on a downlink carrier of the second type carrier.

24. The method according to claim 23, wherein,
   the first type pilot channel is a common pilot channel, a pilot channel for data demodulation or a pilot channel for measurement.

25. The method according to any one of claims 15-24, wherein,
   only an E-DPDCH and a second type pilot channel are carried on an uplink carrier of the second type carrier.

26. The method according to claim 25, wherein,
   the second type pilot channel is a dedicated pilot channel.

27. The method according to any one of claims 15-26, wherein,
   a spreading factor of a part or all of channels for random access of the second type carrier is P times of a spreading factor of a part or all of equivalent channels for random access of the first type carrier.

28. The method according to any one of claims 15-27, wherein,
   a spreading factor of a control channel and/or a common channel of the second type carrier is P times of a spreading factor of an equivalent control channel and/or an equivalent common channel of the first type carrier.

29. A network side device, comprising:

   a control unit, configured to configure a first type carrier and a second type carrier, wherein a chip rate of the first type carrier is 3.84 mega chips per second Mcps, a chip rate of the second type carrier is P*3.84Mcps, and P is smaller than 1 and larger than 0;
   a communication unit, configured to use the first type carrier and/or the second type carrier for communication.

30. The network side device according to claim 29, wherein,
   a transmission time interval TTI length of at least one cell corresponding to the first type carrier is the same as a TTI length of at least one cell corresponding to the second type carrier.

31. The network side device according to claim 29 or 30, wherein,
   an identifier ID of at least one cell corresponding to the second type carrier is the same as an ID of at least one cell corresponding to the first type carrier.

32. The network side device according to any one of claims 29-31, wherein,
   a primary scrambling sequence used by at least one cell corresponding to the second type carrier is the same as a primary scrambling sequence of at least one cell corresponding to the first type carrier; or
   a primary scrambling sequence used by at least one cell corresponding to the second type carrier is determined according to a primary scrambling sequence of at least one cell corresponding to the first type carrier.

33. The network side device according to any one of claims 29-32, wherein,
   the chip rate of the second type carrier or the number of the second type carriers is carried by a radio resource control RRC signaling of the first type carrier.

34. The network side device according to any one of claims 29-33, wherein,
   a spreading factor adopted by a high speed physical downlink shared channel HS-PDSCH of a downlink carrier of the second type carrier is 16, and a spreading factor of a pilot channel of the downlink carrier of the second type carrier is P times of a spreading factor of an equivalent pilot channel of a downlink carrier of the first type carrier.

35. The network side device according to any one of claims 29-34, wherein,
   a spreading factor adopted by an enhanced dedicated physical data channel E-DPDCH of an uplink carrier of the second type carrier is one or multiple of spreading factors capable of being adopted by an uplink carrier of the first type carrier.

36. The network side device according to any one of claims 29-35, wherein,
   a spreading factor of a pilot channel of an uplink carrier of the second type carrier is P times of a spreading factor of an equivalent pilot channel of an uplink carrier of the first type carrier.

37. The network side device according to any one of claims 29-36, wherein,
only a HS-PDSCH and a first type pilot channel are carried on a downlink carrier of the second type carrier.

38. The network side device according to claim 37, wherein,
the first type pilot channel is a common pilot channel, a pilot channel for data demodulation or a pilot channel for measurement.

39. The network side device according to any one of claims 29-38, wherein,
only an E-DPDCH and a second type pilot channel are carried on an uplink carrier of the second type carrier.

40. The network side device according to claim 39, wherein,
the second type pilot channel is a dedicated pilot channel.

41. The network side device according to any one of claims 29-40, wherein,
a spreading factor of a part or all of channels for random access of the second type carrier is P times of a spreading factor of a part or all of equivalent channels for random access of the first type carrier.

42. The network side device according to any one of claims 29-41, wherein,
a spreading factor of a control channel and/or a common channel of the second type carrier is P times of a spreading factor of an equivalent control channel and/or an equivalent common channel of the first type carrier.

43. An user equipment, comprising:

an obtaining unit, configured to obtain configuration information of a first type carrier and configuration information of a second type carrier;
a communication unit, configured to use the first type carrier and/or the second type carrier for communication, wherein a chip rate of the first type carrier is 3.84 mega chips per second Mcps, a chip rate of the second type carrier is P*3.84Mcps, and P is smaller than 1 and larger than 0.

44. The user equipment according to claim 43, wherein,
a transmission time interval TTI length of at least one cell corresponding to the first type carrier is the same as a TTI length of at least one cell corresponding to the second type carrier.

45. The user equipment according to claim 43 or 44, wherein,
an identifier ID of at least one cell corresponding to the second type carrier is the same as an ID of at least one cell corresponding to the first type carrier.

46. The user equipment according to any one of claims 43-45, wherein,
a t least one primary scrambling sequence which is used corresponding to the second type carrier is the same as a primary scrambling sequence of at least one cell corresponding to the first type carrier; or
a t least one primary scrambling sequence which is used corresponding to the second type carrier is determined according to the primary scrambling sequence of at least one cell corresponding to the first type carrier.

47. The user equipment according to any one of claims 43-46, wherein,
the chip rate of the second type carrier or the number of the second type carriers is carried by a radio resource control RRC signaling of the first type carrier.

48. The user equipment according to any one of claims 43-47, wherein,
a spreading factor adopted by a high speed physical downlink shared channel HS-PDSCH of a downlink carrier of the second type carrier is 16, and a spreading factor of a pilot channel of the downlink carrier of the second type carrier is P times of a spreading factor of an equivalent pilot channel of a downlink carrier of the first type carrier.

49. The user equipment according to any one of claims 43-48, wherein,
a spreading factor adopted by an enhanced dedicated physical data channel E-DPDCH of an uplink carrier of the second type carrier is one or multiple of spreading factors capable of being adopted by an uplink carrier of the first type carrier.

**50.** The user equipment according to any one of claims 43-49, wherein,
a spreading factor of a pilot channel of an uplink carrier of the second type carrier is P times of a spreading factor of an equivalent pilot channel of an uplink carrier of the first type carrier.

**51.** The user equipment according to any one of claims 43-49, wherein,
only a HS-PDSCH and a first type pilot channel are carried on a downlink carrier of the second type carrier.

**52.** The user equipment according to claim 51, wherein,
the first type pilot channel is a common pilot channel, a pilot channel for data demodulation or a pilot channel for measurement.

**53.** The user equipment according to any one of claims 43-52, wherein,
only an E-DPDCH and a second type pilot channel are carried on an uplink carrier of the second type carrier.

**54.** The user equipment according to claim 53, wherein,
the second type pilot channel is a dedicated pilot channel.

**55.** The user equipment according to any one of claims 43-54, wherein,
a spreading factor of a part or all of channels for random access of the second type carrier is P times of a spreading factor of a part or all of equivalent channels for random access of the first type carrier.

**56.** The user equipment according to any one of claims 43-55, wherein,
a spreading factor of a control channel and/or a common channel of the second type carrier is P times of a spreading factor of an equivalent control channel and/or an equivalent common channel of the second type carrier.

a first type carrier and a second type carrier are configured 〜101

↓

the first type carrier and/or the second type carrier are used for communication 〜102

Fig. 1

configuration information of a first type carrier and configuration information of a second type carrier are obtained 〜201

↓

the first type carrier and/or the second type carrier are used for communication 〜202

Fig. 2

Network Side Device 300

Control Unit 301

Communication Unit 302

Fig. 3

27

User
Equipment
400

Obtaining
Unit
401

Communicati
on Unit
402

Fig. 4

## INTERNATIONAL SEARCH REPORT

| International application No. |
| --- |
| PCT/CN2012/085061 |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: H04J, H04W, H04L, H04B

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, JPTXT, TWTXT: 3.84mcps, 1.92mcps, chip, rate, multi+, second, carrier?, bandwidth

### C. DOCUMENTS CONSIDERED TO BE RELEVANT

| Category* | Citation of document, with indication, where appropriate, of the relevant passages | Relevant to claim No. |
| --- | --- | --- |
| X | ADACHI, F. et al., Coherent DS-CDMA: Promising Multiple Access For Wireless Multimedia Mobile Communications. 1996 IEEE 4TH INTERNATIONAL SYMPOSIUM ON SPREAD SPECTRUM TECHNIQUES AND APPLICATIONS PROCEEDINGS, September 1996, vol. 1, page 352, column 1, lines 2-17, and table II | 1-5, 9-12, 15-19, 23-26, 29-33, 37-40, 43-47, 51-54 |
| Y | | 6-8, 13, 14, 20-22, 27, 28, 34-36, 41, 42, 48-50, 55, 56 |
| Y | LI, Yao; Discussion on planning and optimization of WCDMA network, MOBILE COMMUNICATIONS, September 2012, vol. 36, no. 13, pages 17-19, sections 2.1 and 2.3, ISSN 1006-1010 | 6-8, 13, 14, 20-22, 27, 28, 34-36, 41, 42, 48-50, 55, 56 |
| A | The same as above | 1-5, 9-12, 15-19, 23-26, 29-33, 37-40, 43-47, 51-54 |
| A | US 2005175073 A1 (PAJUKOSKI et al.), 11 August 2005 (11.08.2005), the whole document | 1-56 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 August 2013 (19.08.2013) | 29 August 2013 (29.08.2013) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer GAO, Xia Telephone No.: (86-10) 62411499 |
| --- | --- |

Form PCT/ISA/210 (second sheet) (July 2009)

## INTERNATIONAL SEARCH REPORT
Information on patent family members

International application No.

**PCT/CN2012/085061**

| Patent Documents referred in the Report | Publication Date | Patent Family | Publication Date |
|---|---|---|---|
| US 2005175073 A1 | 11.08.2005 | AU 2002337213 A1 | 25.05.2004 |
| | | WO 2004040788 A1 | 13.05.2004 |
| | | EP 1556961 A1 | 27.07.2005 |

Form PCT/ISA/210 (patent family annex) (July 2009)

# INTERNATIONAL SEARCH REPORT

International application No.

**PCT/CN2012/085061**

**CONTINUATION OF SECOND SHEET: A. CLASSIFICATION OF SUBJECT MATTER**

H04J 13/00 (2011.01) i

H04W 28/16 (2009.01) i

Form PCT/ISA/210 (extra sheet) (July 2009)